# EUROPEAN PATENT APPLICATION

(11) **EP 2 117 231 A1**
(43) Date of publication of application: **11.11.2009**
(21) Application number: 08155731.6
(22) Date of filing: 06.05.2008
(51) Int. Cl.: H04N 7/173

(54) **Service providing method and service providing apparatus for generating and transmitting a digital television signal stream and method and receiving means for receiving and processing a digital television signal stream**

(71) Applicant: Sony Corporation, Tokyo 108-0075 (JP)
(72) Inventor: Szucs, Paul, 7032, Stuttgart (DE)
(74) Representative: Körber, Martin Hans

(57) **Abstract**

The present invention relates to a service providing method for generating and transmitting a digital television signal stream (10), comprising the steps of providing at least one downscaled sub picture service stream (S2, S4) having a resolution equal to or less than the resolution of the standard definition television SDTV format, multiplexing (S5) the at least one downscaled sub picture service stream in one transport stream and transmitting (S6) said transport stream to a receiving means (3).

The present invention further relates to a method for receiving and processing a digital television signal stream (10), whereby the transport stream has multiplexed thereto at least one downscaled sub picture service stream having a resolution equal to or less than the resolution of the standard definition television SDTV format, comprising the steps of receiving (S 11) the transport stream, separating (S12) the at least one downscaled sub picture service stream, and displaying (S16) on a display (12) the at least the downscaled sub picture service stream according to predefined or user defined display parameters.

Additionally the present invention relates to a service providing apparatus (5) and to a receiving means (3).

## Description

The present invention generally relates to the field of transmission and reception of a digital television signal stream. Specifically, the present invention relates to the provision of additional services and applications in the field of transmitting and receiving a digital television signal stream.

The concept of transport streams exists in the digital television broadcast environment. For example, a transport stream may contain video data for a number of different services, i.e. channels, together with audio and auxiliary data. This auxiliary data may contain data about current or future broadcast events or programs, i.e. in the form of teletext, or in a form which can be used by EPG electronic program guide software on the receiving side. The auxiliary data may also include signalling data for example to indicate whether different audio streams are carried or whether a video stream is high definition or standard definition. But the auxiliary data are not adapted to carry additional service streams having for example a different resolution.

In case a plurality of different services is transmitted within the transport stream, some receivers are adapted to derive a sub picture from a specific service by downscaling the service video stream thereby generating a reduced sized moving image. The receivers are thereby capable of generating a grid view of future programs concurrently with a picture in picture or a picture in guide view of the currently received event.

The disadvantage of this method with non-broadcast environments, e.g. IPTV, is the high amount of transmitted data, since at least two service video streams are transmitted in full size.

Known from the BBC broadcasts is a so-called News Multiscreen service in which a full sized video image is made up of four reduced resolution display segments showing concurrently news, sports news, weather, etc for example. An MHEG application running on a receiver allows a user to highlight each display segment and select an appropriate audio stream for the selected display segment from the transport stream.

The disadvantage is that the receiver receiving a transport stream including the News Multiscreen service does not have the flexibility to isolate any one of the reduced resolution display segments from the full size video at the transport stream level.
A commonly used signal type is a stream according to the digital video broadcast DVB type. DVB transport streams are commonly used to carry video streams compressed and encoded according to the H.264/AVC standard, which corresponds to the MPEG-4/AVC standard. For this video codec different applications are known, such as broadcast TV, video services over DSL, real-time conversational services, i.e. video conferencing and remote video surveillance, but no specific features and application for the delivery of such services are specified.

The document ETSI TS 101 154 V1.8.1-"Digital Video Broadcasting (DVB); specification for the Use of Video and Audio Coding in Broadcasting Applications based on the MPEG-2 Transport Stream" discloses the DVB standard based on an MPEG-2 transport stream. Specifically, this document defines the usage of high definition HD and standard definition SD video streams according to the MPEG-2, VC-1 and H.264/AVC video codecs. This document defines several different standard definition resolutions, whereby the lowest SD source luminance resolution is 352 x 288 for 50Hz systems and 352 x 240 for 60Hz systems. This document does not define the possibility of providing additional services and corresponding applications.

Document ETSI EN 300 468 V1.9.1-"Digital Video Broadcasting (DVB); Specification for Service Information (SI) in DVB Systems" reveals the possibility of providing above-mentioned auxiliary data in addition to the transport streams. But this document fails to disclose any additional services and applications transmitted together with the transport stream.

Document ETSI TS 102 005 V1.3.1-"Digital Video Broadcasting (DVB); Specification for the Use of Video and Audio Coding in DVB Services delivered directly over IP Protocols" discloses the use of DVB over Internet Protocol (IP), where video is transferred from a head-end to a specific receiver in a point to point or a multicast transmission. Due to the point to point transmission in the IPTV there is no requirement to multiplex many services together in the same transport stream since a receiver is requesting only one single service at a time. This document therefore does not provide additional services or applications.
It is therefore the object of the present invention to improve the prior art. Specifically, it is the object of the present invention to provide additional services and applications. Further, it is an object of the present invention to reduce the size of the digital television signal stream transmitted by a service providing apparatus to a receiving means. It is an additional object of the present invention to provide additional services and applications even in cases where only the transmission of a single service stream is provided.

These objects are solved by a service providing method for generating and transmitting a digital television signal stream according to claim 1, by a method for receiving and processing a digital television signal stream according to claim 9, by a service providing apparatus for generating and transmitting a digital television signal stream according to claim 18 ,by a receiving means for receiving and processing a digital television signal stream according to claim 19 and by a digital television signal stream according to claim 20.

The present invention relates to a service providing method for generating and transmitting a digital television signal stream, comprising the steps of providing at least one downscaled sub picture service stream having a resolution equal to or less than the resolution of the standard definition television SDTV format, multiplexing the at least one downscaled sub picture service stream in one transport stream and transmitting said transport stream to a receiving means.

The present invention further relates to a method for receiving and processing a digital television signal stream, whereby the transport stream has multiplexed thereto at least one downscaled sub picture service stream having a resolution equal to or less than the resolution of the standard definition television SDTV format, comprising the steps of receiving the transport stream, separating the at least one downscaled sub picture service stream, and displaying on a display the at least the downscaled sub picture service stream according to predefined or user defined display parameters.

Additionally, the present invention relates to a service providing apparatus for generating and transmitting a digital television signal stream, comprising providing means for providing at least one downscaled sub picture service stream having a resolution equal to or less than the resolution of the standard definition television SDTV format, multiplexing means for multiplexing the at least one downscaled sub picture service stream in one transport stream and a transmitter for transmitting said transport stream to a receiving side.

Further, the present invention relates to a receiving means for receiving and processing a digital television signal stream, whereby the transport stream has multiplexed thereto at least one downscaled sub picture service stream having a resolution equal to or less than the resolution of the standard definition television SDTV format, comprising a receiver receiving the transport stream, a processing unit for separating the at least one downscaled sub picture service stream, and a display for displaying the at least tone downscaled sub picture service stream separated by the processing unit according to display parameters.

Additionally, the present invention relates to a digital television signal stream comprising a transport stream for digital video data comprising at least one downscaled sub picture service stream having a resolution equal to or less than the resolution of the standard definition television SDTV format and further comprising stream identification data identifying the at least one downscaled sub picture service stream within the transport stream.

Advantageous features and embodiments are defined in the sub claims.

The present invention will now be explained in more detail in the following description of preferred embodiments in relation to the enclosed drawings in which
Fig. 1 shows a schematic block diagram of the broadcasting system comprising a service providing apparatus and a receiver means according to the present invention
Fig.2 is a flow chart showing the process steps of the service providing method according to the present invention,
Fig. 3 is a flow chart showing the process steps according to the method for receiving and processing a digital television signal stream according to the present invention,
Figures 4a to 4d are different possibilities for displaying the received digital television signal stream according to the present invention,
Figure 5 shows a first embodiment of an application according to the present invention, and
Figure 6 shows a second embodiment of an application according to the present invention.

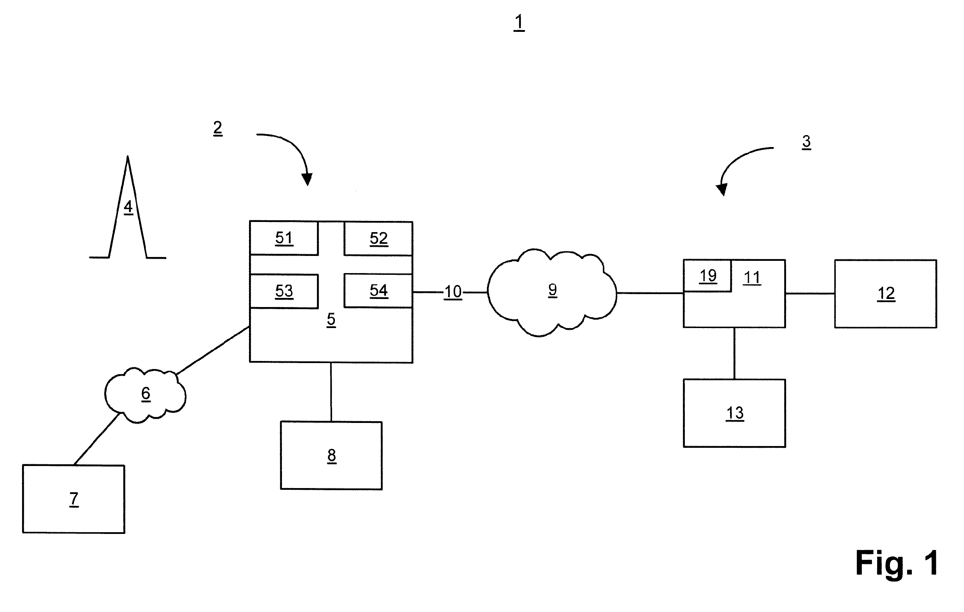

Figure 1 is a schematic block diagram of a broadcasting system 1, comprising a service providing apparatus 5 and a receiving means 3 according to the present invention.

The service providing apparatus 5 transmits a digital television signal stream 10 through a digital television network 9 to the receiving means 3. In the preferred embodiment of the invention the broadcasting system 1 is a digital television broadcasting system in accordance with the European Telecommunication Standard Institute (ETSI), but any other current or future broadcast standard can be used in the present invention. Preferably, the present invention is a broadcasting system 1 according to the standard of digital video broadcast (DVB), including any type of DVB physical layer, i.e. DVB-S, DVB-S2, DVB-C, DVB-C2, DVB-T, DVB-T2, DVB-H, DVB-IP and/or DVB-SH. But the present invention is not limited to the DVB environment and may be applicable to other broadcast or IPTV standards, such as ATSC, ARIB or any other current or future television transmission standard.

On the provider side different sources for television signals including video and audio content and optionally associated signal information are provided. A first source 7 can be linked by an arbitrary network 6 with the service providing apparatus 5. Alternatively or additionally a second source 8 can be connected with the service providing apparatus by a direct link. Alternatively or additionally aerials 4 are provided, each covering a respective broadcast cell defined by its operation range. The service providing apparatus 5 is adapted to receive the television signals transmitted from the aerial 4, the first source 7 and the second source 8. The different channels, programs and/or services received from the different sources are provided for further processing and for transmission by a providing means 51 comprised in the service providing apparatus 5. I.e. the providing means 51 receives the television signals from different sources and provides them to the further components within the service providing apparatus 5 for further processing and/or transmission. It is thereby possible to provide service streams from one or more different sources.

The service providing apparatus 5 further comprises a multiplexing means 53 adapted to multiplex one or more service streams in the transport stream which is then transmitted by a transmitter 54 as digital television signal stream 10. Associated with the providing means 51 is a downscaling means 52 which is adapted to downscale at least one of the service streams provided by the providing means 51 to a lower resolution thereby providing a downscaled service stream.

That means that in order to obtain a downscaled service stream, several possibilities can be used. The service providing apparatus 5 can receive a readily downscaled service stream which is then provided for further processing by the providing means 51, e.g. directly to the multiplexing means 53. In this first case no further downscaling by the service providing apparatus 5 will be accomplished. According to a further possibility, the service providing apparatus 5 can receive a partly downscaled service stream which is then provided for further downscaling by the providing means 51 to the downscaling means 52 and afterwards to the multiplexing means 53. Otherwise, the providing means 51 can provide an unprocessed service stream to the downscaling means 52 so that the whole downscaling procedure is accomplished by the downscaling means 52. In any case the providing means 51 directly of after some processing steps provides a downscaled sub picture service stream.

According to the main idea underlying the present invention, a downscaled sub picture service stream in the transport stream is provided having a low resolution and being separable from the transport stream and from other streams, if present, and which on the receiving side can be processed and displayed independent from the transport stream and from other streams. The downscaled sub pictures service stream according to the present invention therefore differs from the streams of the previously discussed BBC News Multiscreen. In the BBC News Multiscreen it is not possible to isolate any of the reduced resolution display segments from the full size video at the transport stream level like in the present invention, each reduced resolution display segment is therefore not a sub picture in the sense of the present invention.

According to a first aspect of the present invention at least one main service stream and at least one downscaled sub picture service stream are multiplexed to the transport stream and transmitted as digital television signal stream 10 to the receiving means 3. Hereby, the downscaled sub picture service stream has a resolution lower than the resolution of the main service stream and is separable and independent from the main service stream The present invention thereby enables the possibility of receiving and displaying a sub picture on the receiving side.

According to a second aspect of the present invention at least one downscaled sub picture stream without a main stream is multiplexed to the transport stream and transmitted as digital television signal stream 10 o the receiving means 3. This enables a very simple way of providing a sub picture on the receiving side and at the same time allows to use the advantages being provided by the transport stream. The downscaled sub picture service stream can be carried in the MPEG-2 transport stream format, e.g. defined by DVB or other television transmission standards. Thereby the advantages of the MPEG-2 transport stream can be used such as synchronisation and the like. But also every other current or future type of transport stream can be used.

The important advantage of the present invention in comparison with the prior art is that the downscaling is accomplished on the provider side 2. I.e. the sub pictures are a pre-rendered downscaled version of services which are readily prepared and downscaled by the service providing apparatus 5 or even prior to the service providing apparatus 5. This has the advantage that the amount of data transmitted via the digital television network can be reduced. Additionally, in the field of IPTV environment where usually only one single service stream is transmitted this has the advantage of providing a sub picture and additional applications. Further, the sub picture service stream is separable from the other streams, if present, and can be processed and displayed independently on the receiving side.

As already explained, it is to be noted, that the downscaling does not necessarily have to be accomplished by the service providing apparatus 5, but that in another embodiment the service providing apparatus 5 receives readily or partly downscaled sub picture service streams from any of the sources 4, 7, 8. But in any case the downscaling, i.e. the provision of a stream having the sub picture format will be accomplished prior to multiplexing the streams in the transport stream.

The digital television network 9 can be of any type, i.e. can provide a wireless or wired transmission according to any current of future digital television signal type. In the preferred embodiment the digital television signal stream 10, i.e. the transport stream is of the digital video broadcast DVB type. In a further preferred embodiment, the transport stream is of the DVB-IP type, i.e. the digital television signal stream 10 is transmitted according to the IP protocol over the internet thereby providing an internet protocol television IPTV. In this case the service providing apparatus will encapsulate the IP traffic into the stream of the signals for television in accordance with the DVB specification for the usage of vide and audio coding of DVB services over IP defined in document ETSI TS 102 005 V1.3.1.

In the preferred embodiment the transport streams and the main stream is provided according to the MPEG-2 systems standard but the present invention can also be applied to any other current or future service stream types. The main stream is further transmitted with a resolution according to the high definition television HDTV or the standard definition television SDTV standard.

The downscaled sub picture stream has a resolution lower than the resolution of the main stream. That means in case the main stream has a resolution according to the standard definition television, then the downscaled sub picture service stream will have a resolution lower than that of the SDTV format. Preferably, in the present invention as codec for the sub picture service stream the H.264/AVC (MPEG-4 part 10) standard is used, but also any of the other standard codecs, e.g. MPEG 1, MPEG 2, MPEG 4 part 2 or any other current or future standard can be used. In case the H.264/AVC standard is used the format of the downscaled sub picture stream is preferably baseline profile, level 1.3. In this case the video resolution of the sub picture can be any of 128 x 96 (SQCIF), 176 x 144 (QCIF), 320 x 240 (QVGA), 352 x 240 (525 SIF) or 352 x 288 (CIF), or any other resolution being lower than the resolution of the main stream and enabling the transmission of the sub picture service stream. Currently the DVB-SI standard does not provide for including a downscaled sub picture service stream at a resolution below the SD format. This facility can be provided by defining a new stream content type for H.264/AVC sub picture video and component types for H.264/AVC sub picture video with e.g. 4:3 and 16:9 aspect ratios at 25H and 30Hz and similarly for sub picture steams using other video codecs.

In case that one or more sub picture service streams are multiplexed on the transport stream without a main stream, then the resolution of the sub picture service streams can be a resolution according to the standard definition format or a resolution lower than the SD format, e.g. any of the above mentioned resolutions. The downscaled sub picture service streams can have the same or different resolutions.

The term "low resolution" is intended to characterise the resolution of the at least one downscaled sub picture service stream. In case that only one or more downscaled sub picture service streams are comprised in the transport stream, then the term "low resolution" refers to a resolution equal to and/or lower than the resolution of the standard definition television format. In case that in addition to the at least one downscaled sub picture service stream at least one main service stream is comprised within the transport stream, then the resolution of the downscaled sub picture service stream is lower than the resolution of the main service stream. Specifically, in case the main service stream has a resolution according to the SD format, then the resolution of the at least one downscaled sub picture service stream is lower than the resolution of the SD format. Otherwise, in case the main service stream has a resolution according to the high definition format, then the resolution of the sub picture service stream may be equal to the resolution of the SD format. In any case the downscaled sub picture service streams have as maximum resolution a resolution according to the SD format.

The SD format is commonly understood to mean a maximum resolution of 720 x 576 for 25Hz systems or 720 x 480 for 30Hz systems, likewise 1920 x 1080 for HD for both systems. The minimum resolution for SD can defined to be 352 x 288 in DVB or other transmission services. But the present invention is also applicable to SD resolutions being lower than the above mentioned resolution values.

The downscaled sub picture service stream can comprise only video or can also comprise associated audio. Hereby, depending on the desired application, the providing means 51 will provide the sub picture service stream readily without or with the associated audio, so that the downscaling means 52 can down scale the provided sub picture service stream. Additionally, further data can be associated with the sub picture service stream providing additional information.

In case of DVB for the sub picture service a new service type added to the service types defined in document ETSI EN 300 468 V1.9.1 can be provided. For example 0x1C meaning "advanced codec sub picture service" can be provided. Thereby a single or a multi program transport stream for sub picture stream content can be adopted so that the sub picture service can be multiplexed with other video services. Like a usual video service, a sub picture service may have one or more accompanying audio streams and other associated streams, e.g. where appropriate subtitles and teletext, but it may also be provided without accompanying audio and/or other streams.

According to the present invention the service providing apparatus 5 is further adapted to receive specific requests from the user or the plurality of users to which the digital television signal stream 10 will be transmitted. Such requests may comprise the number and/or type of the downscaled sub picture service stream, the specific resolution of the main service stream and/or the sub picture service stream. The service providing apparatus 5 will then adapt the service streams multiplexed to the transport stream according to the request of the user.

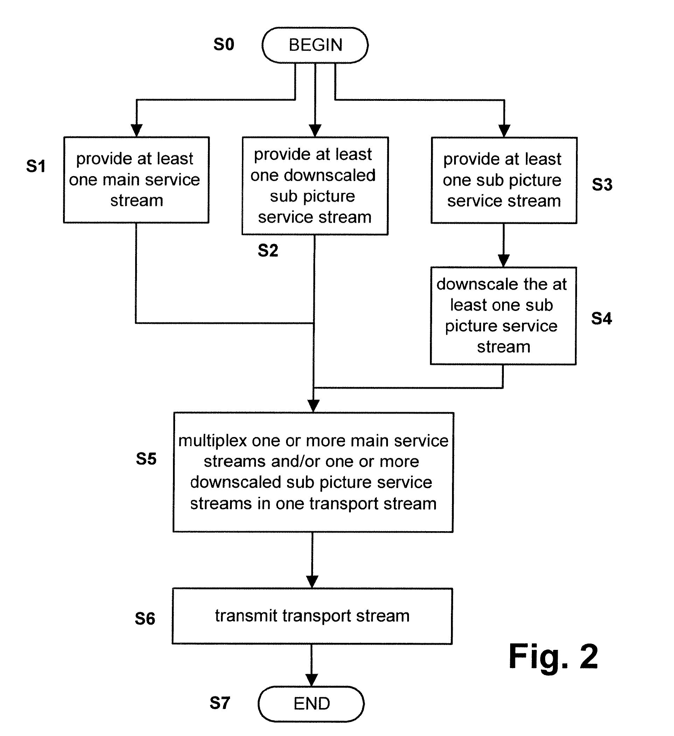

An overview of the process steps carried out by the service providing apparatus 5 will be given with reference to Figure 2. The process begins in step S0, e.g. with the reception of several service streams from one or more sources 4, 7, 8. In step S1 the providing means 51 provides at least one main service stream. In a parallel step S2 the providing means 51 provides at least one readily downscaled sub picture service stream received from any of the sources 4, 7, 8. In a further parallel step the providing means 51 provides at least one sub picture service stream and/or at least one partially downscaled subpicture service stream, which in the following step S4 is then downscaled by the downscaling means 53 to a low resolution, i.e. to a resolution lower than the resolution of the main service stream or to a resolution according to or lower than the SD format. In any case the providing means 51 provides at least one downscaled sub pictures service stream.

It is to be noted, that the above mentioned parallel steps do not all have to be accomplished. I.e. in order to provide a stand alone downscaled sub picture service stream, step S1 can be omitted. Likewise, dependent on the service streams received by the sources 4, 7, 8 only S2 or only S3 and S4 may be accomplished. Further, one or more of the above mentioned parallel processing steps can be accomplished several times in order to provide more than one downscaled sub picture service stream and optionally also more than one main service stream.

In the next step S5 the multiplexing means 53 multiplexes one or more downscaled sub picture service streams and optionally one or more main service streams in one transport stream which is then transmitted in step S6 by the transmitter 54 as digital television signal stream 10 over the digital television network 9 to the receiving means 3. That means that the multiplexing means 53 multiplexes at least one downscaled sub picture service stream on the transport stream. The process ends in step S7.

In the following, the components, functions and applications with relation to the receiving means 3 will be explained in detail. The receiving means 3 comprises a receiver 11 adapted to receive the digital television signal stream 10 transmitted over the digital television network. Additionally, the receiving means 3 comprises a display 12 for displaying programs and optionally a storage for storing received signal streams. The receiver 11 further comprises a processing means 19 for processing the received digital television signal stream 10.

It is to be noted that different types of receiving means can be provided. A first type of receiving means 3 comprises all above-mentioned components in one apparatus, i.e. in an apparatus which is adapted to receive the digital television signal stream 10 and display it on the display 12. In other cases, the receiver 11 may be provided as a separate device, e.g. as a set top box STB. A STB can e.g. be used in the case of transmission of the digital television signal stream 10 in an IPTV environment. But the receiving means 3 according to the present invention is not limited to the described embodiments but can be adapted in any way to receive and display current or future digital television signal stream types.

Generally, consumer video services receiver devices are becoming increasingly capable of receiving and decoding multiple streams of audio-video concurrently. The present invention now discloses a new application of such a receiving means 3 and several applications based on the extension of current digital television signal streams 10 to carry additional downscaled sub picture service stream or to carry stand alone downscaled sub picture service streams

According to the present invention the receiving means 3 is adapted to receive via the receiver 11 the digital television signal stream comprising at least one downscaled sub picture service stream and to separate and process the at least one downscaled sub picture service stream by the processing means 19. At least the received and processed downscaled sub picture service stream will then be displayed on the display 12.

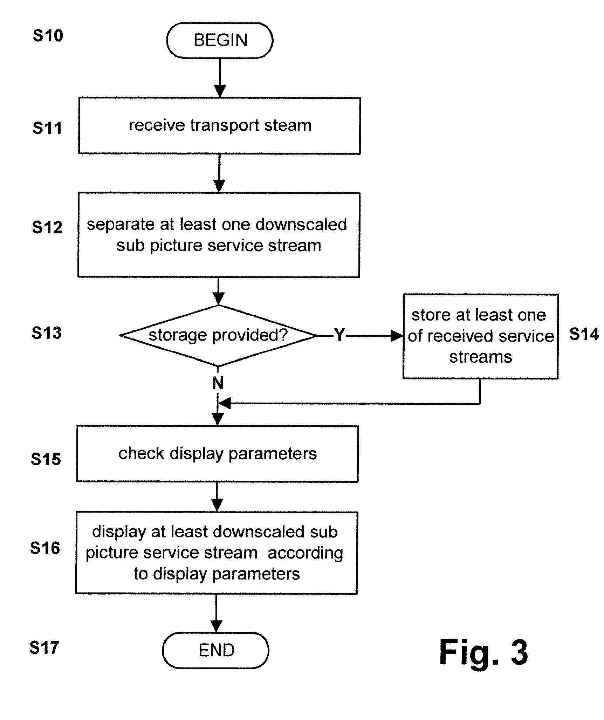

The process steps carried out by the receiving means 3 according to the present invention will now be explained with reference to Figure 3. The process begins in step S10. In the first step S1 the receiver 11 receives the digital television signal stream, i.e. the transport stream comprising at least one downscaled sub picture service stream. In the next step S12 the processing means 19 will separate the at least one downscaled sub picture service stream. I.e. in case one or more main service steams and/or further downscaled sub picture service streams are comprised within the transport stream, also these further streams will be separated. It is clear that the receiver 11 according to the present invention is adapted to carry out any other functionalities necessary for receiving, processing and displaying the television signal stream, i.e. such as decoding and the like. Further, stream identification data identifying the different streams comprised in the transport stream can also be separated and analysed by the receiver 11.

In the next step S13 it is checked whether the storage of any of the received service streams is provided. If this is the case then in step S14 one or all of the received service streams is stored in the storage 13 for later display.

In the next step S15 if the display is provided or requested, the receiving means 3 will check the display parameters. These display parameters will be explained later on. In the following step S16 at least the downscaled sub picture service stream is displayed on the display 12 according to the display parameters. The process ends in step S17.

The above-mentioned display parameters may comprise specifications of how many received service streams should be displayed on the display and with which resolution the received service streams should be displayed on the display 12. Specifically, these parameters may comprise data indicating the size, shape, position, number and/or resolution of the sub pictures service streams and/or of the main streams displayed on the display. These parameters can either be readily set for the receiving means 3 on the vendor side of the receiving means 3 and/or can be set by the user by defining the display parameters over an input means (not shown in the Figure). Additionally or alternatively, the display parameters can be associated data transmitted by the service provider within the transport stream, i.e. the process carried out by the service providing apparatus 5 comprises multiplexing together with the transport stream also video window descriptor positioning information. On the receiver side, the decoding/displaying process then may consist of demultiplexing at least the downscaled sub picture service streams, rendering the at least one downscaled sub picture stream according to the received window descriptor positioning information. To make it clear, the term "display parameters" comprises parameters indicating the number, resolution, size, position and/or shape of the displayed stream and the parameters can be predefined parameters within the setting of receiving means 3, predefined parameters submitted in the transport stream or can be user defined parameters or any combination of the above mentioned possibilities. Specifically, a feature can be provided within an application environment enabling the application provider to place the sub picture video at any position on the display and/or to submit settings indicating shape, size, resolution and number of sub picture service streams.

A further possibility is to provide the downscaled sub picture service stream as a selectable IPTV service. In this case the IPTV user terminal, i.e. the receiving means 3 offers different services and provides the user with the possibility of selecting the desired services and the desired resolution. Alternatively, the service provides the content only in certain resolutions, possibly only in sub picture format. This application can be based on the previously described transport schemes or can alternatively be based on DVB-IP SD&S standard, where the audiovisual service is offered in multiple versions, e.g. HD, SD and sub picture SP. E.g. within an EPG the respective service is offered to the user together with the option to request the SP to be displayed as sub picture superimposed on the main service stream being displayed. Therefore the service selection protocol may include a parameter, e.g. "resolution" to select HD, SD or SP. In some cases the display 12 of the receiving means 3 might not be HD-capable so only the SD and SP resolutions are offered to the user.

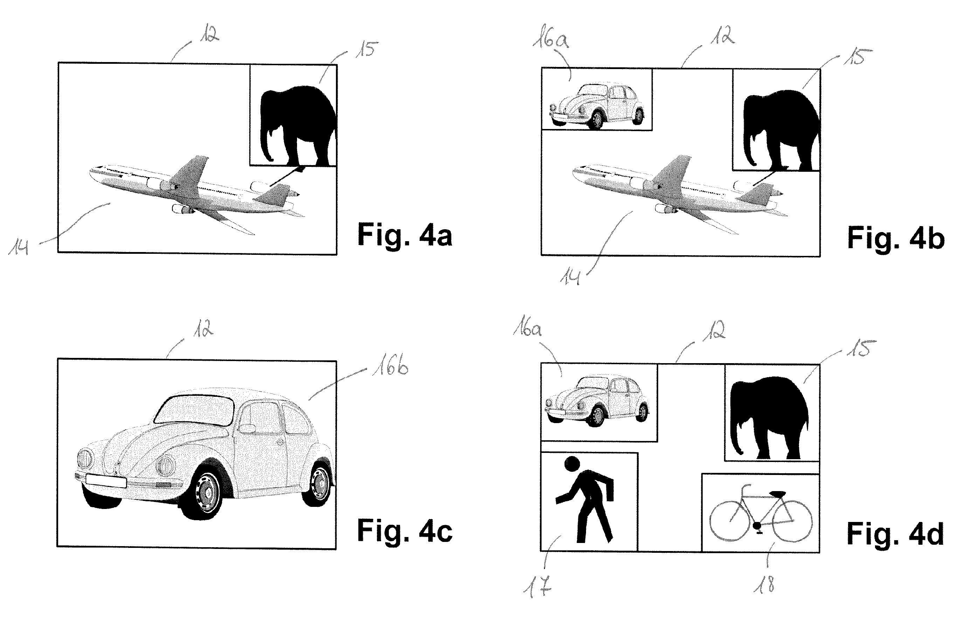

In the following, with reference to Figures 4a to 4d different possibilities of displaying the received service streams will be provided. Hereby, the way of displaying the service streams depends on said previously explained display parameters.

Figure 4a shows an example where the main service stream 14 is displayed on the whole display 12, i.e. in full screen mode. The sub picture service stream is shown in a sub picture 15 having a lower resolution than the main service stream and being shown in a sub picture having a size smaller than the whole display 12 e.g. in a corner of the display 12 overlaying the main service stream. In Figure 4a therefore the application is shown, where the main service stream is displayed on the whole display 12 and the downscaled sub picture service stream 15 is displayed in a sub picture on a part of the display 12. It is to be noted, that the position and shape of the sub picture 15 is not restricted to the shown application but can comprise any possible position, resolution, size and/or shape.

As already explained, the transport stream may comprise a main service stream, a downscaled sub picture service stream and additionally at least one further sub picture service stream. In this case as shown in Figure 4b the main service stream 14 can be shown on the whole display 12, i.e. in full screen mode, and two or more sub picture service streams 15 and 16a can be shown in sub pictures on a part of the display 12. It is again to be noted, that the example shown in Figure 4b does not restrict the number, size, resolution, shape and position of the shown sub pictures.

In Figure 4c a further possibility is shown. In this case only the downscaled sub picture service stream 16b is shown on the whole display, i.e. in full screen mode. That means that the receiver 11 and associated processing means 19 adapt the resolution of the received downscaled sub picture stream in such a way, that only the sub picture stream is shown on the display. Hereby, the sub picture stream can be shown on a part or on the whole display, but in any case no further main stream or sub picture service stream is displayed. I.e. in this case the downscaled sub picture service stream may have been transmitted as stand alone stream within the transport stream without an associated main service stream or a main service stream has been received but is simply not displayed.

In Figure 4d a further application is shown, where several downscaled sub picture service streams have been received, in the present example four sub picture service streams, and whereby the several sub picture service streams are displayed in several sub pictures on the display 12. In this application a mosaic display of the several sub picture service streams can be provided. In case of a transmission according to the DVB standard the readily prepared mosaic descriptor can be used, which provides a collection of different video images to form a coded video component. The information is organized so that each specific information when displayed appears on a small area of the display 12.

In the following, several possible applications and features of the present invention will be further explained. The downscaled sub picture service streams can be provided to enable the following different applications. The transmission of a downscaled sub picture service stream enables low resolution and low bandwidth version of TV programs or other video services for a picture in picture PIP display, either superimposed on the main video stream currently being viewed, or embedded within some other display asset like an EPG, dialogue menu, etc.. Further, in case that the audio video content is not available or in case that it is not possible to transmit a specific stream in a higher resolution, e.g. SD or HD, the downscaled sub picture service stream can be used for transmitting these audio video content.

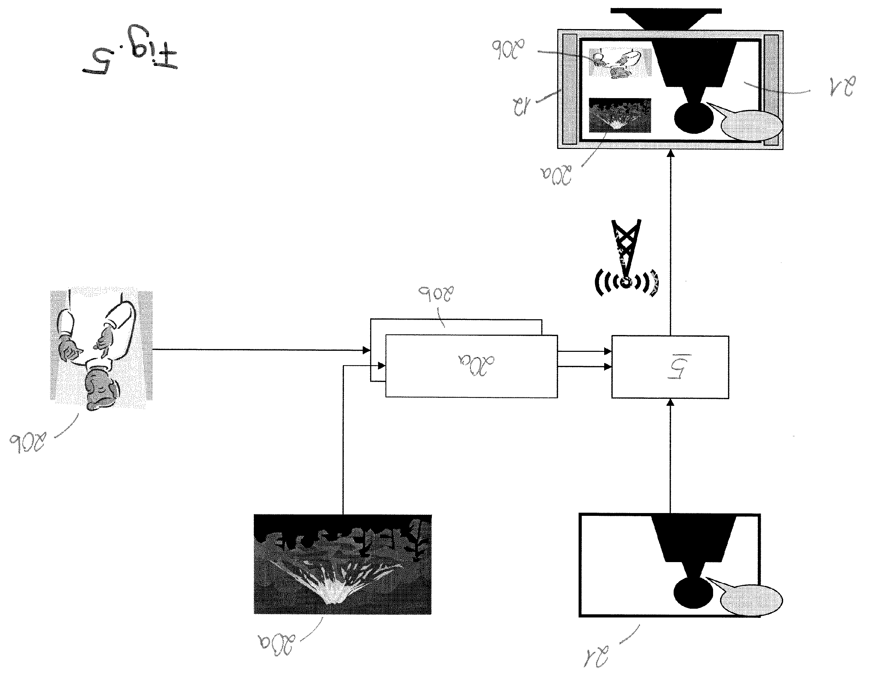

With reference to Figure 5 a first embodiment of an application according to the present invention will be explained. Hereby, the downscaled sub picture service stream is associated with the main video stream in a specific way. E.g. the main service stream 21 may feature a specific location. A first sub picture service stream 20a my provide a live webcam feed from the location currently being featured in the main service stream. A second sub picture service stream 20b may be provided as sign-language video stream for audibly impaired viewers, which then the receiving means 3 super-imposes upon the main service stream on the display 12 together or alternatively to the web-cam service stream 20a.

A further possibility is to provide a separate audio-video commentary service for the main service stream being actually displayed. It is also possible to provide an audio-video feed from an individual be-directional interactive communication.

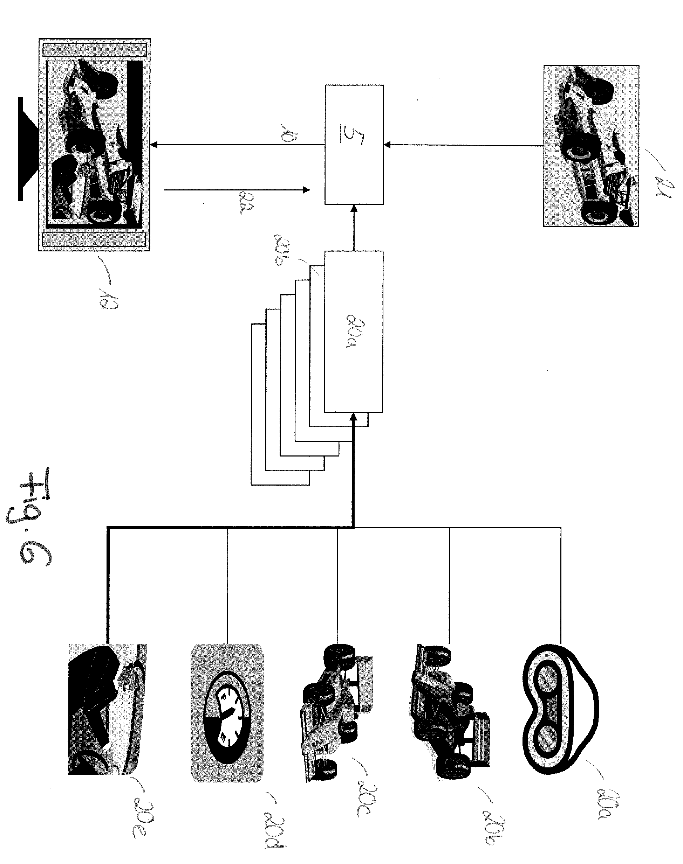

Another possibility will be explained with reference to Figure 6. It is possible to provide in the sub picture service stream an alternative camera angle or view point of for example an event, e.g. a sport event. The one or more sub picture service streams 20a, 20b ... 20e may have different camera angles or view points than the main service stream 21. In the example shown in Figure 6, a car race is featured in the main service stream 21 and in the sub picture service streams 20a, 20b ... 20e different camera angles and/or view points are provided. This enables the viewer to have more flexibility in the enjoyment of the event, enabling the main video stream 21 to be displayed in the background and then to display one or more sub picture service streams 20a, 20b, .... 20e in the four ground. According to the present invention the user can then send requests 22 to the service providing apparatus 5 requesting a specific number and/or type of sub picture service streams. This is different from the prior art, where the user selects one single camera angle to be displayed.

The present invention is not restricted to the specific embodiments and applications but comprises all further embodiments and/or applications which fall under the main ide of the present invention. Specifically, the present invention covers all applications adopting current or future transmission systems and standards. It is to be noted, that components, features and functionalities of the above described embodiments can be mixed with each other where appropriate.

## Claims

1. Service providing method for generating and transmitting a digital television signal stream (10),
comprising the steps of
providing at least one downscaled sub picture service stream (S2, S4) having a resolution equal to or less than the resolution of the standard definition television SDTV format,
multiplexing (S5) the at least one downscaled sub picture service stream in one transport stream and
transmitting (S6) said transport stream to a receiving means (3).

2. Method according to claim 1,
wherein said step of providing at least one downscaled sub picture service stream comprises the steps of
providing (S3) a sub picture service stream and
downscaling (S4) the resolution of the sub picture service stream to a low resolution thereby providing a downscaled sub picture service stream.

3. Method according to any of claims 1 to 2,
comprising the step of providing a transport stream of the digital video broadcast DVB type, preferably of the DVB-IPTV type.

4. Method according to any of claims 1 to 3,
providing as sub picture stream a stream comprising only video or a stream comprising video and associated audio.

5. Method according to any of the preceding claims,
comprising the step of
receiving input from a user for selecting the type and/or number of provided sub picture service streams.

6. Method according to any of claims 1 to 5
comprising the steps of
providing the downscaled sub picture stream according to the MPEG-1, MPEG-2, MPEG-4 part 2 or H.264/AVC standard.

7. Method according to any of claims 1 to 5,
comprising the steps of
additionally providing at least one main service stream (S1),
providing a downscaled sub picture service stream having a resolution lower than the resolution of the main stream and
multiplexing (S6) the at least one main service stream and the at least one downscaled sub picture service stream in said one transport stream.

8. Method according to claim 7,
comprising the steps of
providing the main service stream according to the MPEG-2 standard and
providing the main service stream with a resolution according to the high definition television HDTV format or the standard definition television SDTV format.

9. Method for receiving and processing a digital television signal stream (10),
whereby the transport stream has multiplexed thereto at least one downscaled sub picture service stream having a resolution equal to or less than the resolution of the standard definition television SDTV format,
comprising the steps of
receiving (S11) the transport stream,
separating (S12) the at least one downscaled sub picture service stream, and
displaying (S16) on a display (12) the at least the downscaled sub picture service stream according to predefined or user defined display parameters.

10. Method according to claim 9,
whereby the transport stream has multiplexed thereto at least one main service stream and said at least one downscaled sub picture service stream having a resolution lower than the resolution of the main service stream,
further comprising the step of separating (S12) the at least one main service stream and said at least one downscaled sub picture service stream.

11. Method according to claim 10,
comprising the steps of
displaying the main service stream in full screen mode and
displaying the downscaled sub picture service stream in a sub picture on a part of the display (12).

12. Method according to claim 10,
comprising the step of
displaying only the downscaled sub picture stream on the display (12).

13. Method according to claim 12,
comprising the steps of
receiving the transport stream comprising additionally at least one further sub picture service stream,
separating additionally the at least one further sub picture service stream and
displaying at least the downscaled sub picture stream and the at least one further sub picture service stream on the display (12).

14. Method according to claim 13,
comprising the steps of
displaying the main service stream in full screen mode and
displaying the downscaled sub picture service stream in a first sub picture on a part of the display (12) and
displaying the at least one further sub picture service stream in at least one further sub picture on a part of the display.

15. Method according to claim 13,
comprising the steps of
displaying only the downscaled sub picture service stream in a first sub picture on a part of the display (12) and the at least one further sub picture service stream in at least one further sub picture on a part of the display (12).

16. Method according to any of claims 10 to 15,
comprising the steps of
checking display parameters comprising number, position, resolution, shape and/or size of the service streams to be displayed and
displaying the separated service streams according to the display parameters.

17. Method according to claim 16 ,
comprising the step of
receiving input from a user for defining the display parameters and/or
receiving settings from an application defining the display parameters.

18. Service providing apparatus (5) for generating and transmitting a digital television signal stream (10), comprising
providing means (51) for providing at least one downscaled sub picture service stream having a resolution equal to or less than the resolution of the standard definition television SDTV format,
multiplexing means (53) for multiplexing (S4) the at least one downscaled sub picture service stream in one transport stream and
a transmitter (54) for transmitting (S5) said transport stream to a receiving means (3).

19. Receiving means (3) for receiving and processing a digital television signal stream (10),
whereby the transport stream has multiplexed thereto at least one downscaled sub picture service stream having a resolution equal to or less than the resolution of the standard definition television SDTV format,
comprising
a receiver (11) receiving the transport stream,
a processing unit (19) for separating the at least one downscaled sub picture service stream, and
a display (12) for displaying the at least tone downscaled sub picture service stream separated by the processing unit (19) according to display parameters.

20. Digital television signal stream (10) comprising
a transport stream for digital video data comprising at least one downscaled sub picture service stream having a resolution equal to or less than the resolution of the standard definition television SDTV format and further comprising stream identification data identifying the at least one downscaled sub picture service stream within the transport stream.
